# EUROPEAN PATENT APPLICATION

(11) **EP 4 715 620 A1**
(43) Date of publication of application: **25.03.2026**
(21) Application number: 24829845.7
(22) Date of filing: 20.02.2024
(51) Int. Cl.: G06F 16/22, G06F 16/2455, G06F 16/25

(54) **METADATA PROCESSING METHOD AND SYSTEM, AND COMPUTING DEVICE**

(30) Priority: 29.06.2023 CN 202310786272
(71) Applicant: Huawei Cloud Computing Technologies Co., Ltd., Guiyang, Guizhou, 550025 (CN)
(72) Inventor: WANG, Zhuo, Guiyang, Guizhou 550025 (CN); WU, Wei, Guiyang, Guizhou 550025 (CN); WANG, Jiayuan, Guiyang, Guizhou 550025 (CN); ZENG, Kai, Guiyang, Guizhou 550025 (CN); TONG, Qiang, Guiyang, Guizhou 550025 (CN); ZHONG, Yanhui, Guiyang, Guizhou 550025 (CN); ZHANG, Wenliang, Guiyang, Guizhou 550025 (CN)
(74) Representative: Gill Jennings & Every LLP
(86) International application number: PCT/CN2024/077747
(87) International publication number: WO 2025/001187

(57) **Abstract**

A metadata processing method and system, and a computing device are provided. The method includes: A data production cluster generates metadata of shared data. The data production cluster stores the shared data into a shared storage. The data production cluster receives a metadata operation instruction, and determines target metadata based on the metadata operation instruction, where the target metadata is metadata of target shared data. The data production cluster sends the target metadata to a data consumption cluster. The data consumption cluster reads the target shared data from the shared storage based on the target metadata. In the method, the data consumption cluster may obtain the metadata of the shared data in real time, thereby providing better user experience, and storage costs of the metadata can also be reduced.

## Description

This application claims priority to Chinese Patent Application No. 202310786272.8, filed with the China National Intellectual Property Administration on June 29, 2023 and entitled "METADATA PROCESSING METHOD AND SYSTEM, AND COMPUTING DEVICE", which is incorporated herein by reference in its entirety.

### TECHNICAL FIELD

This application relates to the data storage field, and more specifically, to a metadata processing method and system, and a computing device.

### BACKGROUND

A data warehouse is used as a carrier for data storage and analysis. Currently, major cloud vendors have launched a data warehouse service. Data sharing becomes an attribute of the data warehouse service, and aims to eliminate data silos, implement data transaction and sharing between users, and implement data interworking and sharing between users. Data sharing means that a data producer provides shared data, and a data consumer subscribes to or purchases some shared data generated by the data producer. After the data consumer purchases the shared data, the data consumer may obtain the shared data, and perform data analysis and calculation on the shared data.

In the foregoing process in which the data producer produces and stores the shared data, metadata of the shared data is also generated and stored. When the data consumer is to obtain the shared data from a shared storage, the data consumer needs to obtain the shared data from the shared storage based on the metadata of the shared data. In a related technical solution, the metadata of the shared data is separately stored in a metadata cluster. The metadata cluster is an independent cluster used for storing the metadata. In this case, storage costs of the metadata cluster are high, and large-scale and multi-cluster data sharing cannot be performed. In addition, a data consumption cluster cannot obtain the shared data in real time, and user experience is poor.

Therefore, how to further improve user experience while reducing storage costs of the metadata of the shared data becomes a technical problem that urgently needs to be resolved.

### SUMMARY

This application provides a metadata processing method and system, and a computing device. In the method, a data consumption cluster may obtain metadata of shared data in real time, thereby providing better user experience, and storage costs of the metadata can also be reduced.

According to a first aspect, the metadata processing method is provided. The method includes: A data production cluster generates metadata of shared data, where the data production cluster includes a plurality of data nodes that provide the shared data. The data production cluster stores the shared data into a shared storage, where the shared storage is shared by the data production cluster and a data consumption cluster, and the data consumption cluster includes a plurality of data nodes that use the shared data. The data production cluster receives a metadata operation instruction. The data production cluster determines target metadata based on the metadata operation instruction, where the target metadata is metadata of target shared data, and the shared data includes the target shared data. The data production cluster sends the target metadata to the data consumption cluster. The data consumption cluster reads the target shared data from the shared storage based on the target metadata.

In the foregoing technical solution, the data consumption cluster may obtain the metadata from the data production cluster in real time, so that not only storage overheads caused by extra metadata storage can be reduced, but also a data analysis result of the data consumption cluster can be stable, and better user experience can be provided. In addition, because a data amount of the metadata is small, an amount of traffic between the data consumption cluster and the data production cluster is small, so that a shared cluster can be linearly expanded, and storage costs do not increase as a quantity of shared clusters increases.

With reference to the first aspect, in some implementations of the first aspect, the method further includes: The data consumption cluster receives a data processing instruction for the target shared data. The data consumption cluster processes the target shared data based on the data processing instruction.

With reference to the first aspect, in some implementations of the first aspect, the method further includes: A coordinator node formulates a global execution plan for the data production cluster and the data consumption cluster based on a query request from a user, where the global execution plan includes the metadata operation instruction and the data processing instruction.

With reference to the first aspect, in some implementations of the first aspect, the data production cluster scans an index of the shared data based on the metadata operation instruction to obtain an index of the target shared data; and the data production cluster determines the target metadata based on the index of the target shared data.

In the foregoing technical solution, the data consumption cluster may obtain a corresponding data block based on one piece of metadata, and the index is used for indicating one piece of data in the data block. In this way, after obtaining the data block, the data consumption cluster may not need to perform sequential scanning, but can directly find, based on the index, the data that is to be found in the data block.

With reference to the first aspect, in some implementations of the first aspect, the method further includes: The data production cluster sends the index of the target shared data to the data consumption cluster. The data consumption cluster reads the target shared data from the shared storage based on the target metadata and the index of the target shared data.

With reference to the first aspect, in some implementations of the first aspect, the data production cluster determines one or more destination data nodes in the data consumption cluster based on a correspondence between data nodes in the data consumption cluster and a data shard, where the shared data belongs to a data shard corresponding to the one or more destination data nodes; and the data production cluster sends the target metadata to the one or more destination data nodes.

According to a second aspect, a metadata processing system is provided. The system includes a data production cluster and a data consumption cluster. The data production cluster is configured to generate metadata of shared data, and the data production cluster includes a plurality of data nodes that provide the shared data. The data production cluster is further configured to store the shared data into a shared storage, where the shared storage is shared by the data production cluster and the data consumption cluster, and the data consumption cluster includes a plurality of data nodes that use the shared data. The data production cluster is further configured to receive a metadata operation instruction. The data production cluster is further configured to determine target metadata based on the metadata operation instruction, where the target metadata is metadata of target shared data, and the shared data includes the target shared data. The data production cluster is further configured to send the target metadata to the data consumption cluster. The data consumption cluster is configured to read the target shared data from the shared storage based on the target metadata.

With reference to the second aspect, in some implementations of the second aspect, the data consumption cluster is further configured to receive a data processing instruction for the target shared data; and the data consumption cluster is further configured to process the target shared data based on the data processing instruction.

With reference to the second aspect, in some implementations of the second aspect, the system further includes a coordinator node, configured to formulate a global execution plan for the data production cluster and the data consumption cluster based on a query request from a user, where the global execution plan includes the metadata operation instruction and the data processing instruction.

With reference to the second aspect, in some implementations of the second aspect, the data production cluster is further configured to: scan an index of the shared data based on the metadata operation instruction to obtain an index of the target shared data; and determine the target metadata based on the index of the target shared data.

With reference to the second aspect, in some implementations of the second aspect, the data production cluster is further configured to send the index of the target shared data to the data consumption cluster. The data consumption cluster is specifically configured to read the target shared data from the shared storage based on the target metadata and the index of the target shared data.

With reference to the second aspect, in some implementations of the second aspect, the data production cluster is specifically configured to: determine one or more destination data nodes in the data consumption cluster based on a correspondence between data nodes in the data consumption cluster and a data shard, where the shared data belongs to a data shard corresponding to the one or more destination data nodes; and the data production cluster sends the target metadata to the one or more destination data nodes.

It should be noted that for beneficial effects in the second aspect, refer to beneficial effects in the first aspect. Details are not described herein again.

According to a third aspect, a computing device cluster is provided, and includes at least one computing device. Each computing device includes a processor and a storage. The processor of the at least one computing device is configured to execute instructions stored in the storage of the at least one computing device, to cause the computing device cluster to perform the method according to any one of the first aspect or the possible implementations of the first aspect.

Optionally, the processor may be a general-purpose processor, and may be implemented by using hardware or software. When the processor is implemented by using hardware, the processor may be a logic circuit, an integrated circuit, or the like. When the processor is implemented by using software, the processor may be a general-purpose processor, and is implemented by reading software code stored in the storage. The storage may be integrated into the processor, or may be located outside the processor and exist independently.

According to a fourth aspect, a computer program product including instructions is provided. When the instructions are run by a computing device cluster, the computing device cluster is caused to perform the method according to any one of the first aspect or the implementations of the first aspect.

According to a fifth aspect, a computer-readable storage medium is provided, and includes computer program instructions. When the computer program instructions are executed by a computing device cluster, the computing device cluster performs the method according to any one of the first aspect or the implementations of the first aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

Optionally, in an implementation, the foregoing storage medium may be specifically a non-volatile storage medium.

### BRIEF DESCRIPTION OF DRAWINGS

FIG. 1 is a block diagram of a data sharing service provided by a data warehouse;
FIG. 2 is a block diagram of a cloud scenario to which an embodiment of this application is applicable;
FIG. 3 is a schematic flowchart of a metadata processing method according to an embodiment of this application;
FIG. 4 is a block diagram of a metadata processing system according to an embodiment of this application;
FIG. 5 is a block diagram of another metadata processing system 500 according to an embodiment of this application;
FIG. 6 is a diagram of an architecture of a computing device 1500 according to an embodiment of this application;
FIG. 7 is a diagram of an architecture of a computing device cluster according to an embodiment of this application; and
FIG. 8 is a diagram of a connection between computing devices 1500A and 1500B through a network according to an embodiment of this application.

### DESCRIPTION OF EMBODIMENTS

The following describes technical solutions of this application with reference to accompanying drawings.

Each aspect, embodiment, or feature is presented in this application with reference to a system including a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

Moreover, in embodiments of this application, terms such as "example", "for example", or the like are used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A service scenario described in embodiments of this application is intended to describe the technical solutions in embodiments of this application more clearly, and does not constitute a limitation on the technical solutions provided in embodiments of this application. A person of ordinary skill in the art may learn that, with evolution of network architectures and emergence of new service scenarios, the technical solutions provided in embodiments of this application are also applicable to a similar technical problem.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

In this application, at least one means one or more, and a plurality of means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

A data warehouse is used as a carrier for data storage and analysis. Currently, major cloud vendors have launched a cloud data warehouse service. In a cloud computing scenario, a storage and computing separation architecture of the data warehouse (cloud data warehouse) decouples computing from storage, and stores a large amount of user data in a shared storage (for example, an object storage service OBS on the cloud) for data sharing. Therefore, data sharing becomes an attribute of the cloud data warehouse service, and aims to eliminate data silos, implement data transaction and sharing between users, and implement data interworking and sharing between users. One piece of data is shared by a plurality of clusters in real time. In this way, concurrency can be improved simply and effectively, loads can be isolated based on services, and a capability of carrying multi-cluster concurrency can be quickly expanded.

It should be understood that a data sharing service provided by the data warehouse means that a data producer provides shared data, and a data consumer subscribes to or purchases some shared data of the data producer. After the data consumer purchases the shared data, the data consumer may obtain the shared data, and perform data analysis and calculation on the shared data.

In an example, the shared data may include but is not limited to: a table, a materialized view, some column data in a table, or some row data in a table of the data producer.

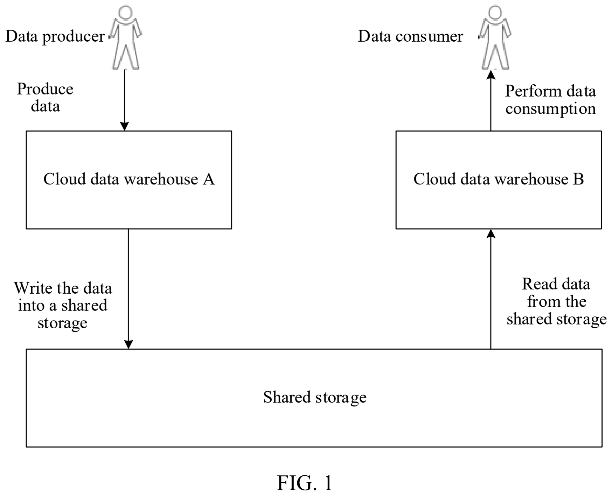

For ease of understanding, the following first describes in detail a basic principle of a data sharing service provided by a data warehouse with reference to FIG. 1.

As shown in FIG. 1, a data producer continuously generates data in a cloud data warehouse and writes the produced data to a shared storage. The data producer can also authorize, based on data subscription or purchase of a data consumer, the data consumer to read a specific part of data stored in the shared storage. The data consumer can read the purchased or subscribed part of data from the shared storage, perform data analysis and calculation on the part of data, and perform a process of data consumption.

It should be understood that data stored in the shared storage may be referred to as shared data.

Specifically, in the foregoing process in which the data producer produces and stores the shared data, metadata of the shared data is also generated and stored. When a computing cluster needs to access data generated by another cluster, how to obtain the metadata needs to be considered, so that required user data can be obtained from the shared storage based on the metadata.

It should be understood that the metadata of the shared data is used for describing the shared data, and is information that describes an attribute of the shared data. For example, the metadata of the shared data may include but is not limited to information such as a location and an address of the shared data stored in the shared storage.

In a related technical solution, the metadata of the shared data is separately stored in a metadata cluster. The metadata cluster is an independent cluster used for storing the metadata. In this case, storage costs of the metadata cluster are high, and large-scale and multi-cluster data sharing cannot be performed. In addition, a data consumption cluster cannot obtain the shared data in real time, and user experience is poor.

In view of this, an embodiment of this application provides a metadata processing method. In this case, the data consumption cluster can obtain the metadata of the shared data in real time, so that a data analysis result of the data consumption cluster can be stable, and better user experience can be provided. In addition, storage costs can be further reduced, and large-scale and multi-cluster data sharing can be performed.

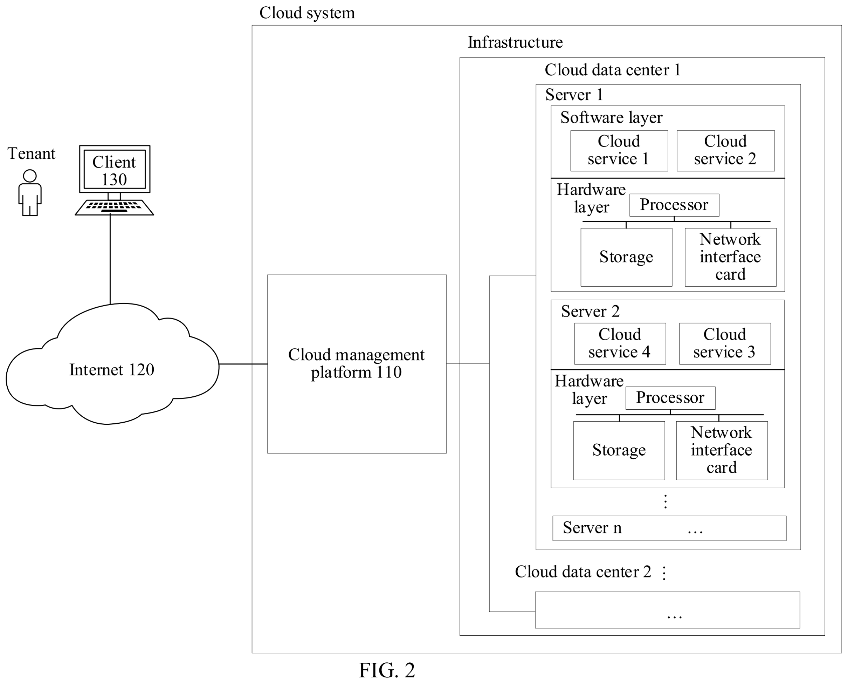

In a possible implementation, the method provided in this embodiment of this application may be applied to a cloud service scenario, and a cloud management platform in the cloud service scenario performs the method. For ease of descriptions, the following first describes the cloud service scenario in detail with reference to FIG. 2.

FIG. 2 is a block diagram of a cloud scenario to which an embodiment of this application is applicable. As shown in FIG. 2, the cloud scenario may include a cloud management platform 110, an internet 120, and a client 130.

As shown in FIG. 2, the cloud management platform 110 is configured to manage an infrastructure that provides a plurality of cloud services. The infrastructure includes a plurality of cloud data centers, each cloud data center includes a plurality of servers, and each server includes a cloud service resource to provide a corresponding cloud service for a tenant.

The cloud management platform 110 may be located in the cloud data center, and may provide an access interface (for example, an interface or an application program interface (application program interface, API)). The tenant may operate the client 130 to remotely access the access interface, to register a cloud account and a password on the cloud management platform 110, and log in to the cloud management platform 110. After the cloud management platform 110 successfully authenticates the cloud account and the password, the tenant may further pay on the cloud management platform 110 to select and purchase a virtual machine with a specific specification (a processor, a memory, or a disk). After the payment for purchase succeeds, the cloud management platform 110 provides a remote login account and password of the purchased virtual machine, and the client 130 may remotely log in to the virtual machine, and install and run an application of the tenant in the virtual machine. Therefore, the tenant may create, manage, log in to, and operate the virtual machine in the cloud data center via the cloud management platform 110. The virtual machine may also be referred to as a cloud server (elastic compute service, ECS) or an elastic instance (different cloud service providers have different names).

It should be understood that the tenant of the cloud service may be an individual, an enterprise, a school, a hospital, an administrative agency, or the like.

Functions of the cloud management platform 110 include but are not limited to a user console, a computing management service, a network management service, a storage management service, an authentication service, and an image management service. The user console provides the interface or the API to interact with the tenant. The computing management service is used for managing a bare-metal server and a server running the virtual machine and a container. The network management service is used for managing a network service (for example, a gateway and a firewall). The storage management service is used for managing a storage service (such as a data bucket service). The authentication service is used for managing the account and the password of the tenant. The image management service is used for managing a virtual machine image. The tenant may use the client 130 to log in to the cloud management platform 110 over the internet 120 to manage a rented cloud service.

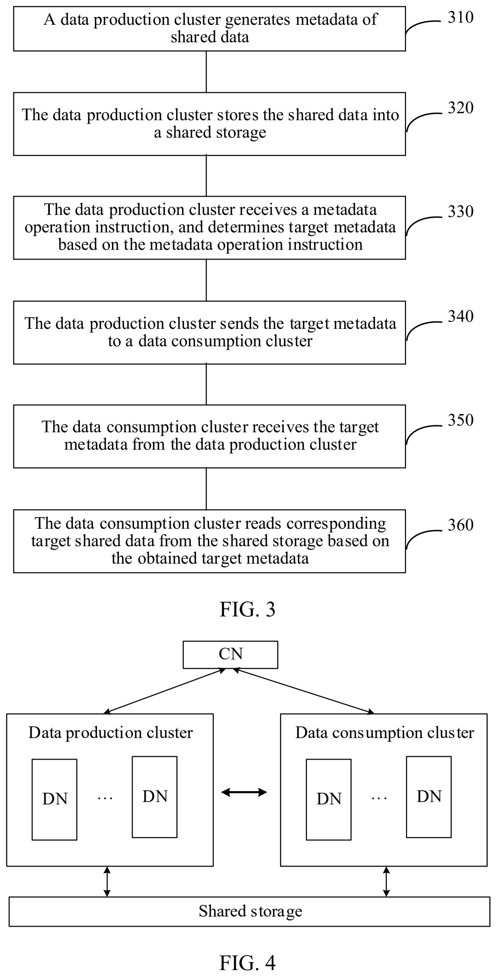

FIG. 3 is a schematic flowchart of a metadata processing method according to an embodiment of this application. As shown in FIG. 3, the method may include step 310 to step 360. The following describes step 310 to step 360 in detail.

Step 310: A data production cluster generates metadata of shared data.

In embodiments of this application, after generating the shared data, the data production cluster may also generate the metadata of the shared data. For specific metadata related to the shared data, refer to the foregoing descriptions. Details are not described herein again.

In an example, the data production cluster may include a plurality of data nodes (data node, DN), and the plurality of data nodes are configured to produce or provide the shared data.

In an example, the foregoing shared storage may be a cloud storage or may be another storage device, provided that functions of the shared storage can be implemented. This is not specifically limited in embodiments of this application.

Step 320: The data production cluster stores the shared data into the shared storage.

In embodiments of this application, the data production cluster may store the shared data into the shared storage. The shared storage is shared by the data production cluster and a data consumption cluster.

In an example, the data consumption cluster may include a plurality of data nodes (data node, DN) that use the shared data stored in the shared storage.

Step 330: The data production cluster receives a metadata operation instruction, and determines target metadata based on the metadata operation instruction.

In an example, in a specific implementation, as shown in FIG. 4, a data sharing system includes the data production cluster, the data consumption cluster, and a coordinator node (coordinator node, CN). As a global coordinator node, the CN may formulate a global execution plan for the data production cluster and the data consumption cluster based on a query request from a user. The global execution plan may include the metadata operation instruction and a data processing instruction. The metadata operation instruction is used by the data production cluster to determine the target metadata based on the metadata operation instruction. The target metadata is metadata of target shared data, and the shared data includes the target shared data. The data processing instruction is used by the data consumption cluster to process the target shared data based on the data processing instruction.

The data production cluster is used as an example. After receiving the metadata operation instruction included in the global execution plan delivered by the CN, the data production cluster may determine the target metadata based on the metadata operation instruction. Specifically, in a possible implementation, the query request sent by the user may include the target shared data required by the data consumption cluster for data analysis. The CN may formulate, based on the query request from the user, the metadata operation instruction for the data production cluster. The metadata operation instruction instructs the data production cluster to determine the metadata of the target shared data required by the data consumption cluster for data analysis. After receiving the metadata operation instruction, the data production cluster scans locally stored metadata of the shared data based on the metadata operation instruction, and obtains the metadata of the target shared data (the target metadata).

In some embodiments, the query request sent by the user may further include location information of the target shared data in the shared data. The data production cluster scans indexes of the shared data based on the metadata operation instruction to obtain an index of the target shared data, and determines the target metadata based on the index of the target shared data.

Step 340: The data production cluster sends the target metadata the data consumption cluster.

In this embodiment of this application, after determining the target metadata, the data production cluster may send the target metadata to the data consumption cluster.

In some embodiments, before sending the target metadata to the data consumption cluster, the data production cluster may further process the target metadata, for example, perform operations such as coarse filtering, and serialization and packaging. In this implementation, the data production cluster sends serialized target metadata to the data consumption cluster. Specifically, an operator responsible for scanning and processing metadata may be added. The operator is executed on the DN in the data production cluster, and is mainly responsible for operations such as reading the metadata, performing coarse filtering, and serialization and packaging.

In an example, in a specific implementation, in a process of sending the target metadata, the data production cluster may transmit the target metadata from the data production cluster to the data consumption cluster by using a remote channel between the data production cluster and the data consumption cluster, for example, compression unit description information (compression unit description, CUDesc) streaming.

In this embodiment of this application, an example in which the data consumption cluster includes the plurality of data nodes is used. Before sending the target metadata to the data consumption cluster, the data production cluster needs to determine one or more destination data nodes in the data consumption cluster, and sends the target metadata to the one or more destination data nodes. In an example, the data production cluster may determine the one or more destination data nodes in the data consumption cluster based on a correspondence between data nodes in the data consumption cluster and a data shard.

It should be understood that the shared data belongs to a data shard corresponding to the one or more destination data nodes.

In this embodiment of this application, the CN may further manage and record the correspondence between a DN and a shard. If a DN node is scaled, only the correspondence between a shard and a DN node needs to be changed. In this way, distribution of data is irrelevant to a quantity of nodes.

In some embodiments, if the data production cluster determines the target metadata based on the index of the target shared data, the data production cluster may also send the index of the target shared data to the data consumption cluster.

It should be noted that a method for sending the index of the target shared data by the data production cluster is similar to a method for sending the target metadata by the data production cluster. For details, refer to the foregoing process of sending the target metadata by the data production cluster. Details are not described herein again.

Step 350: The data consumption cluster receives the target metadata from the data production cluster.

In this embodiment of this application, the data consumption cluster may receive the target metadata from the data production cluster. Optionally, if the data production cluster also sends the index of the target shared data to the data consumption cluster, the data consumption cluster may also receive the index of the target shared data from the data production cluster.

For example, the data consumption cluster includes the plurality of data nodes, and the plurality of data nodes in the data consumption cluster separately receive the target metadata from the data production cluster. Optionally, if the data production cluster also sends the index of the target shared data to the one or more destination data nodes in the data consumption cluster, the one or more destination data nodes in the data consumption cluster separately receive the index of the target shared data from the data production cluster.

In some embodiments, if the data consumption cluster receives, from the data production cluster, serialized and packaged target metadata, the data consumption cluster may further perform deserialization and parsing on the serialized and packaged target metadata, to obtain the target metadata.

Step 360: The data consumption cluster reads the corresponding target shared data from the shared storage based on the obtained target metadata.

In this embodiment of this application, after receiving the target metadata sent by the data production cluster, the data consumption cluster may perform sequential scanning based on the target metadata, and read the corresponding target shared data from the shared storage.

In some embodiments, if the data consumption cluster also receives the index that is of the target shared data and that is sent by the data production cluster, the data consumption cluster may directly read, from the shared storage based on the target metadata and the index of the target shared data, the target shared data indicated by the index.

In some embodiments, the data consumption cluster may also receive the data processing instruction delivered by the CN for the target shared data, and process the obtained target shared data based on the data processing instruction, to perform a process of data consumption.

In the foregoing technical solution, the data consumption cluster may obtain the metadata from the data production cluster in real time, so that not only storage overheads caused by extra metadata storage can be reduced, but also a data analysis result of the data consumption cluster can be stable, and better user experience can be provided. In addition, because a data amount of the metadata is small, an amount of traffic between the data consumption cluster and the data production cluster is small, so that a shared cluster can be linearly expanded, and storage costs do not increase as a quantity of shared clusters increases.

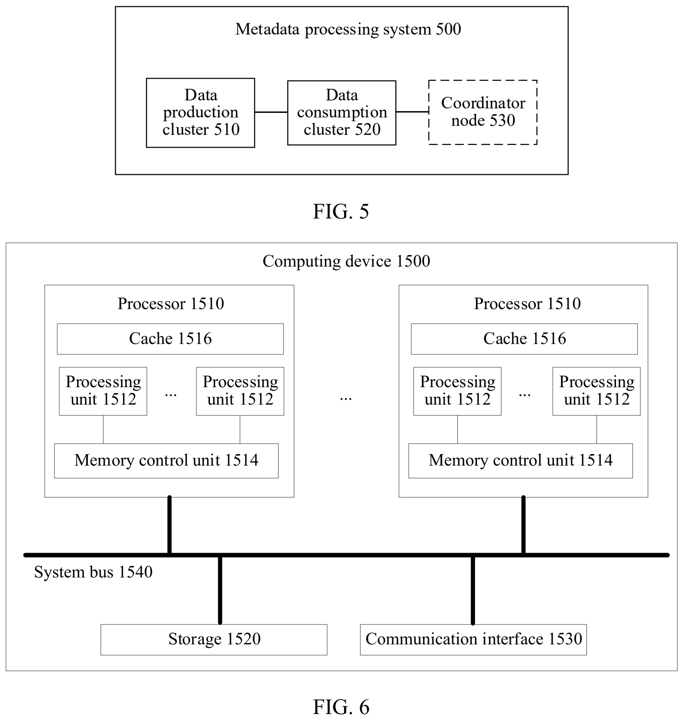

The foregoing describes in detail the method provided in embodiments of this application with reference to FIG. 1 to FIG. 4. The following describes in detail embodiments of a system in this application with reference to FIG. 5 to FIG. 8. It should be understood that descriptions of the method embodiments correspond to descriptions of the system embodiments. Therefore, for a part not described in detail, refer to the foregoing method embodiments.

FIG. 5 is a block diagram of a metadata processing system 500 according to an embodiment of this application. The metadata processing system 500 may be implemented by using software, hardware, or a combination thereof. The metadata processing system 500 provided in this embodiment of this application may implement the method procedure shown in embodiments of this application. The system 500 includes a data production cluster 510 and a data consumption cluster 520. The data production cluster 510 is configured to generate metadata of shared data, and the data production cluster includes a plurality of data nodes that provide the shared data. The data production cluster 510 is further configured to store the shared data into a shared storage, where the shared storage is shared by the data production cluster and the data consumption cluster, and the data consumption cluster includes a plurality of data nodes that use the shared data. The data production cluster 510 is further configured to receive a metadata operation instruction. The data production cluster 510 is further configured to determine target metadata based on the metadata operation instruction, where the target metadata is metadata of target shared data, and the shared data includes the target shared data. The data production cluster 510 is further configured to send the target metadata to the data consumption cluster. The data consumption cluster 520 is configured to read the target shared data from the shared storage based on the target metadata.

Optionally, the data consumption cluster 510 is further configured to receive a data processing instruction for the target shared data, and the data consumption cluster 510 is further configured to process the target shared data based on the data processing instruction.

Optionally, the system 500 further includes a coordinator node 530, configured to formulate a global execution plan for the data production cluster and the data consumption cluster based on a query request from a user, where the global execution plan includes the metadata operation instruction and the data processing instruction.

Optionally, the data production cluster 510 is specifically configured to: scan an index of the shared data based on the metadata operation instruction to obtain an index of the target shared data; and determine the target metadata based on the index of the target shared data.

Optionally, the data production cluster 510 is further configured to send the index of the target shared data to the data consumption cluster. The data consumption cluster 520 is specifically configured to read the target shared data from the shared storage based on the target metadata and the index of the target shared data.

Optionally, the data production cluster 510 is specifically configured to: determine one or more destination data nodes in the data consumption cluster based on a correspondence between data nodes in the data consumption cluster and a data shard, where the shared data belongs to a data shard corresponding to the one or more destination data nodes; and send the target metadata to the one or more destination data nodes.

The system 500 herein may be embodied in a form of a functional module. The term functional module herein may be implemented in a form of software and/or hardware, and this is not specifically limited.

For example, the "data node" may be a software program, a hardware circuit, or a combination thereof that implements the foregoing functions. For example, the following uses the data node in the data production cluster 510 as an example to describe an implementation of the data production cluster 510. Similarly, for example, for implementations of the data consumption cluster 520 and the coordinator node 530, refer to the implementation of the data production cluster 510.

The data node is used as an example of a software functional unit, and the data node may include code run on a computing instance. The computing instance may include at least one of a physical host (a computing device), a virtual machine, and a container. Further, there may be one or more computing instances. For example, the data node may include code run on a plurality of hosts/virtual machines/containers. It should be noted that, the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Generally, one region may include a plurality of AZs.

Similarly, the plurality of hosts/virtual machines/containers configured to run the code may be distributed on a same virtual private cloud (virtual private cloud, VPC), or may be distributed on a plurality of VPCs. Generally, one VPC is disposed in one region. A communication gateway needs to be disposed in each VPC for communication between two VPCs in a same region and cross-region communication between VPCs in different regions. The VPCs are interconnected through the communication gateway.

The data node is used as an example of a hardware functional unit, and the data node may include at least one computing device such as a server. Alternatively, the data node may be a device implemented by using an application-specific integrated circuit (application-specific integrated circuit, ASIC) or a programmable logic device (programmable logic device, PLD), or the like. The PLD may be implemented by using a complex programmable logical device (complex programmable logical device, CPLD), a field-programmable gate array (field-programmable gate array, FPGA), a generic array logic (generic array logic, GAL), or any combination thereof.

A plurality of computing devices included in the data node may be distributed in a same region, or may be distributed in different regions. The plurality of computing devices included in the data node may be distributed in a same AZ, or may be distributed in different AZs. Similarly, the plurality of computing devices included in the data node may be distributed in a same VPC, or may be distributed in a plurality of VPCs. The plurality of computing devices may be any combination of computing devices such as a server, an ASIC, a PLD, a CPLD, an FPGA, and GAL.

Therefore, modules in the examples described in embodiments of this application can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In addition, the system embodiments and the method embodiments provided in the foregoing embodiments belong to a same concept. For specific implementation processes of the system embodiments, refer to the method embodiments. Details are not described herein again.

The method provided in embodiments of this application may be performed by a computing device, and the computing device may also be referred to as a computer system, including a hardware layer, an operating system layer running above the hardware layer, and an application layer running above the operating system layer. The hardware layer includes hardware, for example, a processing unit, a memory, and a memory control unit. Subsequently, functions and structures of the hardware are described in detail. The operating system is any one or more computer operating systems through a process (process), for example, a Linux operating system, a Unix operating system, an Android operating system, an iOS operating system, or a Windows operating system, that implement service processing. The application layer includes application programs such as a browser, an address book, word-processing software, and instant messaging software. In addition, optionally, the computer system is a handheld device, for example, a smartphone, or a terminal device, for example, a personal computer. This is not particularly limited in this application, provided that the method according to embodiments of this application can be implemented. The method provided in embodiments of this application may be performed by the computing device or a functional module that is in the computing device and that can invoke and execute a program.

The following describes, in detail with reference to FIG. 6, a computing device according to an embodiment of this application.

FIG. 6 is a diagram of an architecture of a computing device 1500 according to an embodiment of this application. The computing device 1500 may be a server, a computer, or another device with a computing capability. The computing device 1500 shown in FIG. 6 includes at least one processor 1510 and a storage 1520.

It should be understood that quantities of processors and storages in the computing device 1500 are not limited in this application.

The processor 1510 executes instructions in the storage 1520, so that the computing device 1500 implements the method provided in this application. Alternatively, the processor 1510 executes the instructions in the storage 1520, so that the computing device 1500 implements the functional modules provided in this application, to implement the method provided in this application.

Optionally, the computing device 1500 further includes a communication interface 1530. The communication interface 1530 uses a transceiver module, for example but not limited to, a network interface card or a transceiver, to implement communication between the computing device 1500 and another device or a communication network.

Optionally, the computing device 1500 further includes a system bus 1540. The processor 1510, the storage 1520, and the communication interface 1530 are separately connected to the system bus 1540. The processor 1510 can access the storage 1520 through the system bus 1540. For example, the processor 1510 can read and write data or execute code in the storage 1520 through the system bus 1540. The system bus 1540 is a peripheral component interconnect express (peripheral component interconnect express, PCI) bus, an extended industry standard architecture (extended industry standard architecture, EISA) bus, or the like. The system bus 1540 is classified into an address bus, a data bus, a control bus, or the like. For ease of representation, only one thick line is used to represent the bus in FIG. 6, but this does not mean that there is only one bus or only one type of bus.

In a possible implementation, a function of the processor 1510 is mainly to interpret instructions (or code) of a computer program and process data in computer software. The instructions of the computer program and the data in the computer software may be stored in the storage 1520 or a cache 1516.

Optionally, the processor 1510 may be an integrated circuit chip and has a signal processing capability. By way of example, and not limitation, the processor 1510 is a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware assembly. The general-purpose processor is a microprocessor or the like. For example, the processor 1510 is a central processing unit (central processing unit, CPU).

Optionally, each processor 1510 includes at least one processing unit 1512 and a memory control unit 1514.

Optionally, the processing unit 1512 is also referred to as a core (core) or a kernel, and is the most important component of the processor. The processing unit 1512 is made of monocrystalline silicon through a specific production process. All computation, accept commands, storage commands, and data processing of the processor are executed by the core. The processing unit independently runs program instructions, and increases a running speed of a program by using a parallel computing capability. Various processing units have fixed logical structures. For example, the processing unit includes logical units such as a level 1 cache, a level 2 cache, an execution unit, an instruction level unit, and a bus interface.

In an implementation example, the memory control unit 1514 is configured to control data exchange between the storage 1520 and the processing unit 1512. Specifically, the memory control unit 1514 receives a memory access request from the processing unit 1512, and controls access to the memory based on the memory access request. By way of example, and not limitation, the memory control unit is a device, for example, a memory management unit (memory management unit, MMU).

In an implementation example, each memory control unit 1514 performs addressing for the storage 1520 through the system bus. In addition, an arbiter (not shown in FIG. 6) is configured in the system bus, and the arbiter is responsible for processing and coordinating contention-based access of a plurality of processing units 1512.

In an implementation example, the processing unit 1512 and the memory control unit 1514 are communicatively connected through a connection line like an address line inside a chip, to implement communication between the processing unit 1512 and the memory control unit 1514.

Optionally, each processor 1510 further includes a cache 1516, and the cache is a data exchange buffer (referred to as a cache). When the processing unit 1512 needs to read data, the processing unit 1512 first searches the cache for required data. If the required data is found, the processing unit 1512 directly reads the data. If the required data is not found, the processing unit 1512 searches the storage for the required data. Because the cache runs much faster than the storage, a function of the cache is to help the processing unit 1512 run faster.

The storage 1520 can provide running space for a process in the computing device 1500. For example, the storage 1520 stores a computer program (specifically, code of the program) used to generate the process. After the computer program runs by the processor to generate the process, the processor allocates corresponding storage space to the process in the storage 1520. Further, the storage space further includes a text segment, an initialized data segment, an uninitialized data segment, a stack segment, a heap segment, and the like. The storage 1520 stores, in the storage space corresponding to the process, data generated during running of the process, for example, intermediate data or process data.

Optionally, the storage is also referred to as a memory, and a function of the storage is to temporarily store operation data in the processor 1510 and data exchanged with an external storage such as a hard disk drive. Provided that the computer runs, the processor 1510 schedules, to the memory for an operation, data on which the operation needs to be performed, and the processing unit 1512 sends a result after the operation is completed.

By way of example, and not limitation, the storage 1520 is a volatile memory or a non-volatile memory, or may include both a volatile memory and a non-volatile memory. The non-volatile memory is a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory is a random access memory (random access memory, RAM) and serves as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the storage 1520 in the system and method described in this specification is intended to include but is not limited to these storages and any storage of another proper type.

The listed structure of the computing device 1500 is merely an example for descriptions, and this application is not limited thereto. The computing device 1500 in this embodiment of this application includes various types of hardware in a computer system in the conventional technology. For example, the computing device 1500 further includes a storage other than the storage 1520, for example, a magnetic disk storage. A person skilled in the art should understand that the computing device 1500 may further include another component required for implementing normal running. In addition, a person skilled in the art should understand that, based on a specific requirement, the computing device 1500 may further include a hardware device implementing another additional function. In addition, a person skilled in the art should understand that the computing device 1500 may alternatively include only a component required for implementing embodiments of this application, and do not necessarily include all the components shown in FIG. 6.

An embodiment of this application further provides a computing device cluster. The computing device cluster includes at least one computing device. The computing device may be a server. In some embodiments, the computing device may alternatively be a terminal device, a desktop computer, a notebook computer, a smartphone, or the like.

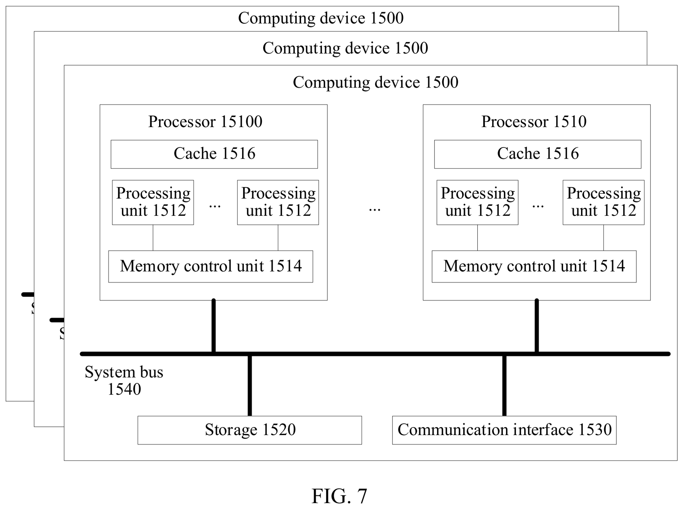

As shown in FIG. 7, the computing device cluster includes at least one computing device 1500. A storage 1520 of one or more computing devices 1500 in the computing device cluster may store same instructions used to perform the foregoing method.

In some possible implementations, the storage 1520 of the one or more computing devices 1500 in the computing device cluster may alternatively store some instructions used to perform the foregoing method separately. In other words, a combination of the one or more computing devices 1500 may jointly execute the instructions of the foregoing method.

It should be noted that storages 1520 in different computing devices 1500 in the computing device cluster may store different instructions respectively used to perform some functions of the foregoing system. In other words, the instructions stored in the storages 1520 in different computing devices 1500 may implement one or more functions of the foregoing system.

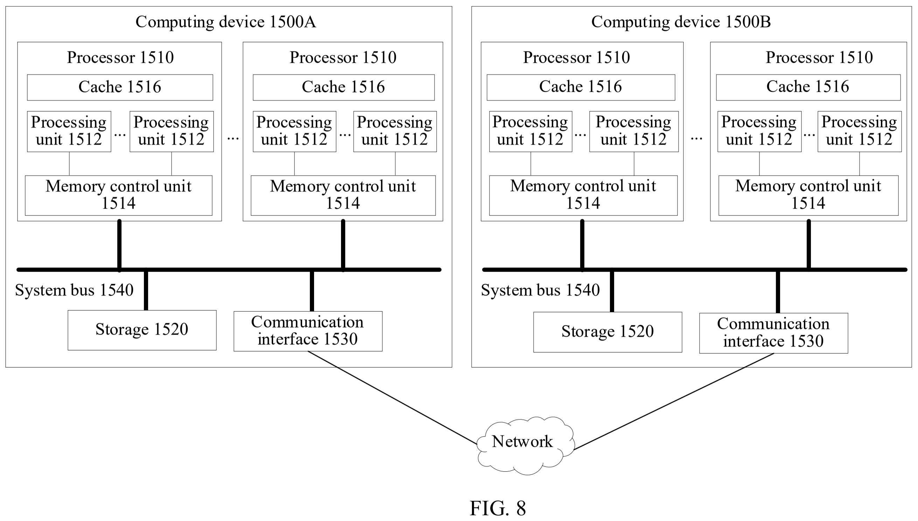

In some possible implementations, the one or more computing devices in the computing device cluster may be connected through a network. The network may be a wide area network, a local area network, or the like. FIG. 8 shows a possible implementation. As shown in FIG. 8, two computing devices 1500A and 1500B are connected through a network. Specifically, each computing device is connected to the network through a communication interface in the computing device.

It should be understood that a function of the computing device 1500A shown in FIG. 8 may alternatively be completed by a plurality of computing devices 1500. Similarly, a function of the computing device 1500B may alternatively be completed by a plurality of computing devices 1500.

In this embodiment, a computer program product including instructions is further provided. The computer program product may be software or a program product that includes the instructions and that can run on a computing device or that can be stored in any usable medium. When the computer program product runs on the computing device, the computing device is enabled to perform the method provided above, or the computing device is enabled to implement a function of the system provided above.

In this embodiment, a computer-readable storage medium is further provided. The computer-readable storage medium may be any usable medium that can be stored by a computing device, or a data storage device like a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions. When the instructions in the computer-readable storage medium are executed by a computing device cluster, the computing device cluster is enabled to perform the method provided above.

It should be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

A person skilled in the art may clearly understand that, for the purpose of convenient and brief descriptions, for a detailed working process of the system described above, refer to a corresponding process in the foregoing method embodiments. Details are not described herein again.

In the several embodiments provided in this application, it should be understood that the disclosed system and method may be implemented in other manners. For example, the described system embodiment is merely an example. For example, division into the units is merely logical function division and may be other division during actual implementation. For example, a plurality of units or components may be combined or integrated into another system, or some features may be ignored or not performed.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for indicating a computer device (which may be a personal computer, a server, or a network device) to perform all or a part of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A metadata processing method, wherein the method comprises:
generating, by a data production cluster, metadata of shared data, wherein the data production cluster comprises a plurality of data nodes that provide the shared data;
storing, by the data production cluster, the shared data into a shared storage, wherein the shared storage is shared by the data production cluster and a data consumption cluster, and the data consumption cluster comprises a plurality of data nodes that use the shared data;
receiving, by the data production cluster, a metadata operation instruction;
determining, by the data production cluster, target metadata based on the metadata operation instruction, wherein the target metadata is metadata of target shared data, and the shared data comprises the target shared data;
sending, by the data production cluster, the target metadata to the data consumption cluster; and
reading, by the data consumption cluster, the target shared data from the shared storage based on the target metadata.

2. The method according to claim 1, wherein the method further comprises:
receiving, by the data consumption cluster, a data processing instruction for the target shared data; and
processing, by the data consumption cluster, the target shared data based on the data processing instruction.

3. The method according to claim 2, wherein the method further comprises:
formulating, by a coordinator node, a global execution plan for the data production cluster and the data consumption cluster based on a query request from a user, wherein the global execution plan comprises the metadata operation instruction and the data processing instruction.

4. The method according to any one of claims 1 to 3, wherein determining, by the data production cluster, the target metadata based on the metadata operation instruction comprises:
scanning, by the data production cluster, an index of the shared data based on the metadata operation instruction to obtain an index of the target shared data; and
determining, by the data production cluster, the target metadata based on the index of the target shared data.

5. The method according to claim 4, wherein
the method further comprises: sending, by the data production cluster, the index of the target shared data to the data consumption cluster; and
reading, by the data consumption cluster, the target shared data from the shared storage based on the target metadata comprises:
reading, by the data consumption cluster, the target shared data from the shared storage based on the target metadata and the index of the target shared data.

6. The method according to any one of claims 1 to 5, wherein sending, by the data production cluster, the target metadata to the data consumption cluster comprises:
determining, by the data production cluster, one or more destination data nodes in the data consumption cluster based on a correspondence between data nodes in the data consumption cluster and a data shard, wherein the shared data belongs to a data shard corresponding to the one or more destination data nodes; and
sending, by the data production cluster, the target metadata to the one or more destination data nodes.

7. A metadata processing system, wherein the system comprises:
a data production cluster, configured to generate metadata of shared data, wherein the data production cluster comprises a plurality of data nodes that provide the shared data;
the data production cluster is further configured to store the shared data into a shared storage, wherein the shared storage is shared by the data production cluster and a data consumption cluster, and the data consumption cluster comprises a plurality of data nodes that use the shared data;
the data production cluster is further configured to receive a metadata operation instruction;
the data production cluster is further configured to determine target metadata based on the metadata operation instruction, wherein the target metadata is metadata of target shared data, and the shared data comprises the target shared data; and
the data production cluster is further configured to send the target metadata to the data consumption cluster; and
the data consumption cluster, configured to read the target shared data from the shared storage based on the target metadata.

8. The system according to claim 7, wherein
the data consumption cluster is further configured to receive a data processing instruction for the target shared data; and
the data consumption cluster is further configured to process the target shared data based on the data processing instruction.

9. The system according to claim 8, wherein the system further comprises:
a coordinator node, configured to formulate a global execution plan for the data production cluster and the data consumption cluster based on a query request from a user, wherein the global execution plan comprises the metadata operation instruction and the data processing instruction.

10. The system according to any one of claims 7 to 9, wherein
the data consumption cluster is further configured to scan an index of the shared data based on the metadata operation instruction to obtain an index of the target shared data; and
the data production cluster is further configured to determine the target metadata based on the index of the target shared data.

11. The system according to claim 10, wherein
the data production cluster is further configured to send the index of the target shared data to the data consumption cluster; and
the data consumption cluster is specifically configured to read the target shared data from the shared storage based on the target metadata and the index of the target shared data.

12. The system according to any one of claims 7 to 11, wherein the data production cluster is specifically configured to:
determine one or more destination data nodes in the data consumption cluster based on a correspondence between data nodes in the data consumption cluster and a data shard, wherein the shared data belongs to a data shard corresponding to the one or more destination data nodes; and
the data production cluster sends the target metadata to the one or more destination data nodes.

13. A computing device cluster, comprising at least one computing device, wherein each computing device comprises a processor and a storage; and
a processor of the at least one computing device is configured to execute instructions stored in a storage of the at least one computing device, to cause the computing device cluster to perform the method according to any one of claims 1 to 6.

14. A computer program product comprising instructions, wherein when the instructions are run by a computing device cluster, the computing device cluster is caused to perform the method according to any one of claims 1 to 6.

15. A computer-readable storage medium, comprising computer program instructions, wherein when the computer program instructions are executed by a computing device cluster, the computing device cluster performs the method according to any one of claims 1 to 6.
